# EUROPEAN PATENT APPLICATION

(11) **EP 2 327 967 A1**
(43) Date of publication of application: **01.06.2011**
(21) Application number: 09275113.0
(22) Date of filing: 23.11.2009
(51) Int. Cl.: G01F 23/296, G01F 23/28

(54) **Liquid level sensor**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A liquid level sensing system, comprising: an input acoustic waveguide, e.g. a rod (3) or a portion of a rod (103), and an output acoustic waveguide, e.g. a rod (4) or a portion of a rod (104), positioned extending into liquid (18) to be sensed; the input waveguide (3; 103) being arranged to receive acoustic energy, e.g. from an acoustic generator (6); an acoustic sensor (8) attached to the output waveguide (4; 104) for sensing acoustic energy at the output waveguide (4; 104) that has been transferred from the input waveguide (3; 103) to the output waveguide (4; 104) by being acoustically coupled by the liquid (18); and a processor (12) arranged to process timing characteristics of the sensed acoustic energy to determine a measure of the liquid level.

## Description

### FIELD OF THE INVENTION

The present invention relates to methods, apparatus and systems for liquid level sensing. The present invention is particularly suited to, but not limited to, sensing liquid fuel levels in liquid fuel tanks.

### BACKGROUND

Fuel level sensors that use acoustic pulse echo techniques to detect the liquid surface are known. Errors can arise due to spurious reflections and/or tilting liquid surfaces. Also, because signals are broadcast into a fuel tank environment, relatively high power is required. Also, isolation e.g. keeping electrical currents away from the fuel tank environment is relatively challenging.

### SUMMARY OF THE INVENTION

In a first aspect, the present invention provides a liquid level sensing system, comprising: a first substantially elongate acoustic waveguide, hereinafter referred to as the input waveguide; a second substantially elongate acoustic waveguide, hereinafter referred to as the output waveguide; the input waveguide and the output waveguide both being positioned extending into liquid to be sensed and positioned relatively closely to each other compared to the lengths of the waveguides; the input waveguide being arranged to receive acoustic energy; the system further comprising: an acoustic sensor attached to the output waveguide for sensing acoustic energy at the output waveguide that has been transferred from the input waveguide to the output waveguide by the input waveguide and the output waveguide being acoustically coupled by the liquid; and a processor arranged to process timing characteristics of the sensed acoustic energy to determine a measure of the liquid level.

The input waveguide being arranged to receive acoustic energy may comprise the input waveguide being acoustically coupled to an acoustic generator arranged to provide input acoustic energy to the input waveguide.

The acoustic generator may further be arranged to provide, to the processor, timing information related to the input acoustic energy.

The processor may further be arranged to process the timing information related to the input acoustic energy as provided by the acoustic generator, as part of determining the measurement of the liquid level.

The acoustic generator may be acoustically coupled to the input waveguide by a further acoustic waveguide, the further acoustic waveguide comprising non-electrical fibres.

The input waveguide and the output waveguide may be separate discrete objects.

The input waveguide and the output waveguide may be different longitudinal portions of a single object, a return shape being provided between the two portions such that the input waveguide and the output waveguide extend with the relatively closely spaced apart positioning.

The processor may further be arranged to process timing information of sensed acoustic energy that has travelled along the input waveguide and then via the return shape into the output waveguide and then along the output waveguide before being sensed by the acoustic sensor, as part of determining the measurement of the liquid level.

The input waveguide and the output waveguide may be separate discrete objects, and being arranged to receive acoustic energy may comprise the input waveguide being acoustically coupled to an ambient acoustic energy source, and the system may further comprise a further acoustic sensor, the further acoustic sensor being attached to the input waveguide.

The processor may further be arranged to process timing information of sensed acoustic energy sensed by the further acoustic sensor, as part of determining the measurement of the liquid level.

The acoustic sensor/sensors may be a fibre-optic based acoustic sensor/sensors.

In a further aspect, the present invention provides a liquid level sensing method, the method comprising: providing an input acoustic waveguide and an output acoustic waveguide in a liquid container; injecting acoustic energy into the input acoustic waveguide; sensing timing information of acoustic energy that has been coupled into the output acoustic waveguide from the input acoustic waveguide; and determining a measure of the liquid level from the timing information.

The injected acoustic energy may be provided in the form of one or more acoustic pulses.

In a further aspect, the present invention provides a computer program or plurality of computer programs arranged such that when executed by a computer system it/they cause the computer system to operate in accordance with the above method aspects.

In a further aspect, the present invention provides a machine readable storage medium storing a computer program or at least one of the plurality of computer programs of the preceding aspect.

In a further aspect, the present invention provides a liquid level sensing system, comprising: an input acoustic waveguide, e.g. a rod or a portion of a rod, and an output acoustic waveguide, e.g. a rod or a portion of a rod, positioned extending into liquid to be sensed; the input waveguide being arranged to receive acoustic energy, e.g. from an acoustic generator; an acoustic sensor attached to the output waveguide for sensing acoustic energy at the output waveguide that has been transferred from the input waveguide to the output waveguide by being acoustically coupled by the liquid; and a processor arranged to process timing characteristics of the sensed acoustic energy to determine a measure of the liquid level.

### BRIEF DESCRIPTION OF THE DRAWINGS

Figure 1 is a schematic illustration (not to scale) of a liquid level sensing system according to a first embodiment;
Figure 2 is a process flowchart showing certain process steps implemented in an embodiment of a liquid level sensing method;
Figure 3 is a schematic illustration (not to scale) of a timing diagram;
Figure 4 is a schematic illustration (not to scale) of a liquid level sensing system according to a further embodiment;
Figure 5 is a process flowchart showing certain process steps implemented in a further embodiment of a liquid level sensing method;
Figure 6 is a schematic illustration (not to scale) of a timing diagram; and
Figure 7 is a schematic illustration (not to scale) of a liquid level sensing system according to a further embodiment.

### DETAILED DESCRIPTION

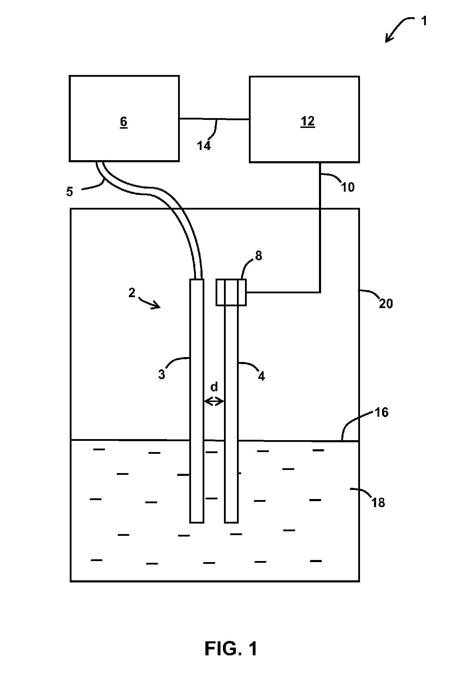

Figure 1 is a schematic illustration (not to scale) of a liquid level sensing system 1 according to a first embodiment. In this embodiment the liquid level sensing system 1 comprises a rod assembly 2, an acoustic waveguide 5, an acoustic generator 6, an acoustic sensor 8, a first link 10, a processor 12, and a second link 14. Figure 1 shows the liquid level sensing system 1 being used to sense the position i.e. level of the surface 16 of a liquid 18 (e.g. fuel) in a container 20 (in this example a sealed fuel tank).

In this embodiment the rod assembly 2 comprises two separate solid rods 3, 4 of substantially equal length and diameter, and of the same metal. The two rods 3, 4 are positioned substantially parallel to each other and such that the distance d between the two rods 3, 4 is significantly smaller than the length of the rods 3, 4. The rod is positioned in the container 20 such that the rods 3, 4 extend down in to the container to at least a position that corresponds to a lowest fuel surface level that is required to be sensed. In this embodiment, the rods 3, 4 are held in position by means of a suitable mounting or mountings made from a material with high acoustic attenuation so as not to impede the operation of the sensor, for example by allowing spurious and unwanted sound to enter the sensor. The mountings are accordingly preferably made from a resilient material, such as a rubber compound or a silicone compound.

The two rods 3, 4 may conveniently be termed an input rod 3 and an output rod 4 respectively.

The input rod 3 is coupled via the acoustic waveguide 5 to the acoustic generator 6. The acoustic waveguide 5 is joined to the input rod 3 at the top of the input rod 3 (i.e. at a position that lies inside the container 20, although in other embodiments this may be at a position outside the container 20), in such a way as to provide acoustic pulse/wave coupling between the acoustic waveguide 5 and the input rod 3.

The acoustic sensor 8 is attached to the top of the output rod 4, (i.e. at a position that lies inside the container 20, although in other embodiments this may be at a position outside the container 20), in such a way as to allow the acoustic sensor 8 to sense acoustic pulse(s)/waves being transmitted through the output rod 4. The acoustic sensor 8 is coupled via the first link 10 to the processor 12, in this embodiment optically coupled.

The processor is furthermore electrically coupled to the acoustic generator 6 via a second link 14.

In this embodiment, the acoustic generator 6 is arranged to provide acoustic pulses with known timing. In this embodiment, the operation of the acoustic generator is controlled according to instructions received from the processor 12 via the second link 14. The acoustic generator 6 is further arranged to provide confirmation of the timing of the generated acoustic pulses to the processor 12 via the second link 14.

In this embodiment, the acoustic waveguide 5 is optical fibre as used conventionally for communication links or light distribution.

By virtue of using such an item as the acoustic waveguide in this embodiment, a first advantage is that due to the flexibility of the structure, physically arranging, accommodating and connecting the waveguide is relatively straightforward, and a second advantage is that no electrical input is required within the container 20, which allows safe operation in explosive or combustible environments such as a fuel tank environment.

In this embodiment, the acoustic sensor 8 is a fibre-optic acoustic wave sensor, i.e. an example of a non-electrical transducer. Furthermore, the first link is an optical link comprising optical fibres. Other suitable optical sensors may also be employed as sensitive vibration/acoustic sensors. These may be realised using a variety of methods such as optical fibre interferometry or intensity modulation using opto-mechanical designs (as described for example in "Series on optical fibre sensors", Eds. Culshaw, Rogers and Weiss, Artech House).

By virtue of using this type of acoustic pulse/wave sensor and link in this embodiment, a first advantage is that due to the flexibility of the link, physically arranging, accommodating and connecting the waveguide is relatively straightforward, and a second advantage is that no electrical operation is required within the container 20 or even within the vicinity of the container 20, which allows safe operation in explosive or combustible environments such as a fuel tank environment. A third advantage is that the links need no shielding against electromagnetic or electrical interference since they are non-electrical in operation. This reduces mass and allows longer cable lengths without the need for signal conditioning amplifiers, especially in respect of the sensor element.

The acoustic sensor 8 is arranged to send its sensed signals via the first link 10 to the processor 12.

In overview, in operation, an acoustic pulse (or plurality of pulses forming an acoustic wave) is generated by the acoustic generator 6 and injected via the acoustic waveguide 5 into the rod assembly 2, more particularly into the input rod 3. The input rod 3 functions as an acoustic guiding structure, i.e. as an acoustic waveguide. With the rods surrounded by gas (e.g. air) or fuel vapour, as the pulse propagates almost all of the acoustic energy is confined within the input rod 3 due to a large mismatch in acoustic impedance between the input rod 2 and the surrounding gas/vapour. However, where there is liquid in the space between the input rod 3 and the output rod 4, an acoustic transmission path is created with a much smaller mismatch of acoustic impedances between the input rod 3 and the output rod 4 and surroundings. A significant proportion of the acoustic pulse is thus transmitted through the liquid 18 from the input rod 3 to the output rod 4. The output rod 4 also functions as an acoustic guiding structure, i.e. as an acoustic waveguide, and consequently the acoustic pulse it has received through the medium of the liquid from the input rod 3 is transmitted along the output rod 4 to arrive at the end of the output rod 4.

Energy from the injected pulse will arrive at the acoustic sensor (acoustic transducer) 8 (attached to the end of the output rod 4) sometime after the pulse was originally injected. The delay in arrival will be proportional to the acoustic path length along the input rod 3 and the output rod 4 and from the input rod 3 to the output rod 4, and hence will depend on the level of the liquid 18. The processor 12 receives or otherwise determines timing information of the pulse as first received at the acoustic sensor 8 compared to its generation/injection, and from this timing information determines a measure of the liquid level.

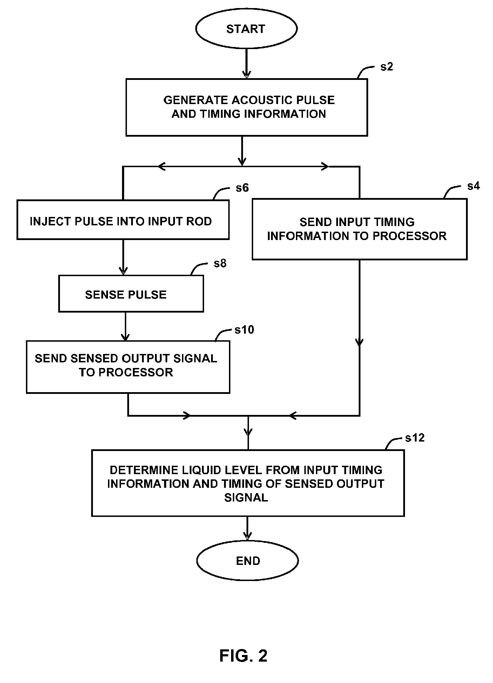

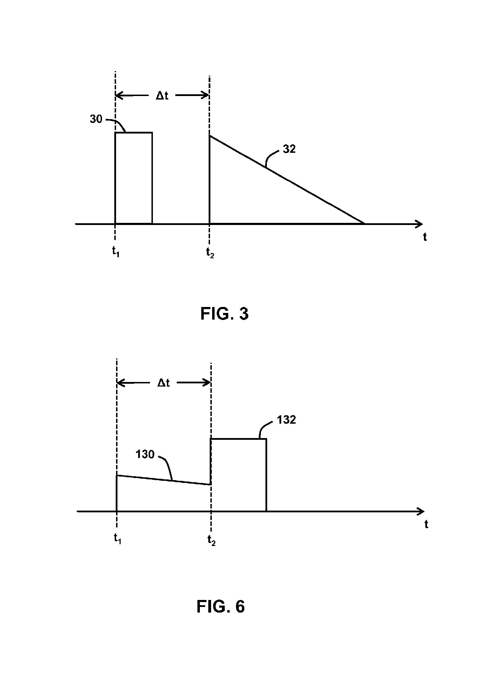

Further details of the operation of the liquid level sensing system 1 will now be described with reference to Figures 2 and 3. Figure 2 is a process flowchart showing certain process steps implemented in an embodiment of a liquid level sensing method.

At step s2, the acoustic generator 6 generates an acoustic pulse and timing information indicating the timing at which the pulse was generated and output by the acoustic generator 6. In this embodiment, the generation of the pulse and timing information is implemented by the acoustic generator 6 in response to a control instruction received from the processor 12 via the second link 14.

At step s4, the timing information is sent from the acoustic generator 6 to the processor 12 via the second link 14.

At step s6, the generated acoustic pulse is injected into the input rod 3. This is carried out by the acoustic pulse being sent along the acoustic waveguide 5 to the top of the input rod 3.

The acoustic pulse then travels along the input rod 3 and/or across the liquid 18 (depending on the level of the liquid 18) to the output rod 4, then along the output rod 4 to the end of the output rod 4 where the acoustic sensor 8 is located, as described earlier above in the overview of the operation of the system 1.

At step s8, the acoustic sensor 8 senses the acoustic pulse as it reaches the end of the output rod 4, and sends a corresponding optical (or in other embodiments electrical) signal representing the sensed acoustic pulse to the processor 12.

Thus, as a result of steps s4 to s10, the processor has received both the input timing information and the sensed output signal.

At step s12, the processor determines a measure of the liquid level by processing the input timing information and by determining timing information of the sensed output signal. This may be carried out in any appropriate manner. Further details of how this is performed in this particular embodiment will now be described with reference to Figure 3.

Figure 3 is a schematic illustration (not to scale) of a timing diagram, with time axis t, representing relative timing information processed by the processor 12 at the above mentioned step s12. An input pulse 30 as generated by the acoustic generator 6 has a leading edge at a time t₁. A corresponding output pulse 32 as sensed by the acoustic sensor 8 has a leading edge at a time t₂. The processor 12 determines the time difference Δt between t₁ and t₂. The processor 12 then determines the measure of the liquid level, which is dependent upon the determined Δt value.

Algorithms, settings and the like for the determination, and calibration, of the liquid level value as a function of the determined Δt value are readily implemented by the skilled person for the particular system under consideration. One possibility is to use empirical experimentation/calibration to determine correlations between liquid levels and Δt values. Another possibility is to carry out such determination in a more theoretical manner using known material characteristics and parameters. Another possibility is to use of combination of the two previously mentioned possibilities. Material characteristics and parameters that may be taken into account include, by way of example, the following:
(i) the acoustic impedances, or differentials therebetween, of the various materials and components, e.g. the difference between the acoustic impedance of the metal material of the rods and the gas/vapour, the difference between the acoustic impedance of the metal material of the rods and the liquid;
(ii) the speed of propagation of acoustic waves in the different materials, e.g. the relevant metals, gas/vapours, and liquid; and
(iii) the lengths of the rods and distance between them.

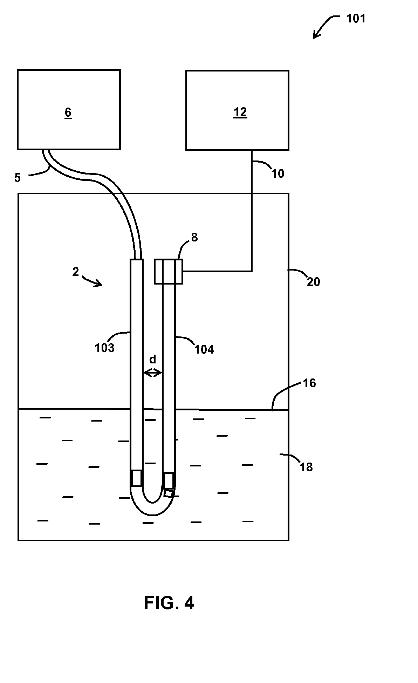

Figure 4 is a schematic illustration (not to scale) of a liquid level sensing system 101 according to a further embodiment. Details of the elements and operation of the system 101 are the same as those described above for the first embodiment of a liquid level sensor system 1, except where described otherwise below. In this embodiment the liquid level sensing system 101 comprises a rod assembly 2, an acoustic waveguide 5, an acoustic generator 6, an acoustic sensor 8, a first link 10 and a processor 12. Figure 4 shows the liquid level sensing system 101 being used to sense the position i.e. level of the surface 16 of a liquid 18 (e.g. fuel) in a container 20 (in this example a sealed fuel tank).

In this embodiment the rod assembly 2 is a continuous solid metal rod with a U-shaped bend at approximately half-way along its length, such that the rod (i.e. rod assembly 2) may be considered as comprising two approximately parallel portions 103, 104 of substantially equal length. The U-shaped bend is such that the distance d between the two rod portions 103, 104 is significantly smaller than the length of the rod portions 103, 104. The rod is positioned in the container 20 such that the rod portions 103, 104 extend down in to the container to at least a position that corresponds to a lowest fuel surface level that is required to be sensed. In this embodiment, the rod 2 is held in position by means of a suitable mounting or mountings made from a material with high acoustic attenuation so as not to impede the operation of the sensor, for example by allowing spurious and unwanted sound to enter the sensor. The mountings are accordingly preferably made from a resilient material, such as a rubber compound or a silicone compound.

The two rod portions 103, 104 may conveniently be termed an input rod portion 103 and an output rod portion 104 respectively.

The input rod portion 103 is coupled via the acoustic waveguide 5 to the acoustic generator 6. The acoustic waveguide 5 is joined to the input rod portion 103 at the top of the input rod portion 103 (i.e. at a position that lies inside the container 20, although in other embodiments this may be at a position outside the container 20), in such a way as to provide acoustic pulse/wave coupling between the acoustic waveguide 5 and the rod 2.

The acoustic sensor 8 is attached to the top of the output rod portion 104, (i.e. at a position that lies inside the container 20, although in other embodiments this may be at a position outside the container 20), in such a way as to allow the acoustic sensor 8 to sense acoustic pulse(s)/waves being transmitted through the rod 2. The acoustic sensor 8 is optically coupled via the first link 10 to the processor 12.

In this embodiment, the acoustic generator 6 is arranged to regularly provide acoustic pulses.

In this embodiment, the acoustic waveguide 5 is a flexible fibre as described earlier above for the first embodiment.

By virtue of using such an item as the acoustic waveguide in this embodiment, a first advantage is that due to the flexibility of the structure, physically arranging, accommodating and connecting the waveguide is relatively straightforward, and a second advantage is that no electrical input is required within the container 20, which allows safe operation in explosive or combustible environments such as a fuel tank environment.

In this embodiment, the acoustic sensor 8 is a fibre-optic acoustic wave sensor, i.e. an example of a non-electrical transducer, and the first link is an optical link comprising optical fibres, as described earlier above for the first embodiment.

By virtue of using this type of acoustic pulse/wave sensor and link in this embodiment, a first advantage is that due to the flexibility of the structure, physically arranging, accommodating and connecting the waveguide is relatively straightforward, and a second advantage is that no electrical operation is required within the container 20 or even within the vicinity of the container 20, which allows safe operation in explosive or combustible environments such as a fuel tank environment.

The acoustic sensor 8 is arranged to send its sensed signals via the first link 10 to the processor 12.

In overview, in operation, an acoustic pulse (or plurality of pulses forming an acoustic wave) is generated by the acoustic generator 6 and injected via the acoustic waveguide 5 into the rod 2, more particularly the input rod portion 103. The rod 2 functions as an acoustic guiding structure, i.e. as an acoustic waveguide. With the rods surrounded by gas (e.g. air) or fuel vapour, as the pulse propagates almost all of the acoustic energy is confined within the rod 2 due to a large mismatch in acoustic impedance between the rod 2 and the surrounding gas/vapour. However, where there is liquid in the space between the input rod portion 103 and the output rod portion 104, an acoustic transmission path is created with a much smaller mismatch of acoustic impedances between the rod 2 and surroundings. A significant proportion of the acoustic pulse is thus transmitted through the liquid 18 from the input rod portion 103 to the output rod portion 104.

Energy from the injected pulse will arrive at the acoustic sensor (acoustic transducer) 8 (attached to the end of the output rod portion 104) sometime after the pulse was originally injected. Some of this will be energy from the input rod portion 103 coupling acoustically to the output rod portion 104 through the medium of the liquid 18. This will start to arrive at the end of the output rod portion 104, i.e. will be sensed by the acoustic sensor 8, after a first delay which will depend upon the level of the liquid 18. After a further delay, the remaining energy of the pulse will arrive at the top of the output rod portion 104, i.e. will be sensed by the acoustic sensor 8, having remained within in the rod assembly 2 as opposed to coupling via the liquid 18, i.e. this energy will have travelled along the whole rod assembly 2, i.e. along the input rod portion 103 and then via the U-shaped bend into and then along the output rod portion 104 to the top of the output rod portion 104. Corresponding sensed signals are output from the acoustic sensor 8 to the processor 12 via the first link 10. The processor 12 determines a measure of the liquid level from the timings, in particular the relative timings, of these sensed signals.

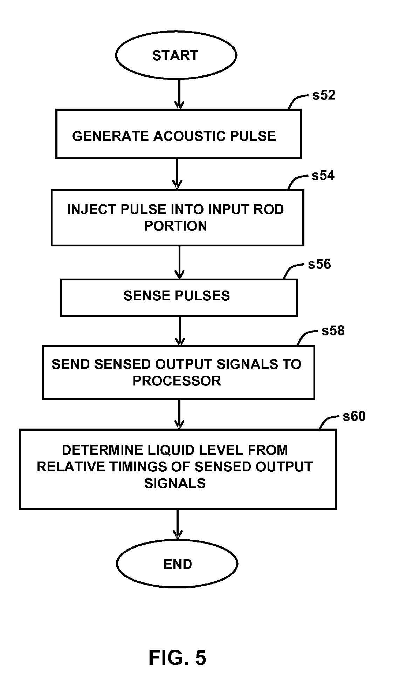

Further details of the operation of the liquid level sensing system 101 will now be described with reference to Figures 5 and 6. Figure 5 is a process flowchart showing certain process steps implemented in a further embodiment of a liquid level sensing method.

At step s52, the acoustic generator 6 generates an acoustic pulse.

At step s54, the generated acoustic pulse is injected into the input rod portion 103. This is carried out by the acoustic pulse being sent along the acoustic waveguide 5 to the top of the input rod portion 103.

As described earlier above in the overview of the operation of the system 101, the acoustic pulse in effect then travels in part along the whole rod assembly 2 (i.e. along the input rod portion 103 then via the U-shaped bend along the output rod portion 104) and in part by being coupled from the input rod portion 103 to the output rod portion 104 via the liquid 18, in effect (or simplified for ease of explanation) travelling as two pulses that arrive at the acoustic sensor 8 at different times, the difference in times being dependent upon the level of the liquid 18.

At step s56, the acoustic sensor 8 senses the acoustic pulses as they reach the end of the output rod portion 104.

At step s58, the acoustic sensor 8 sends corresponding optical (or in other embodiments electrical) signals representing the sensed acoustic pulses to the processor 12. (In practice steps s56 and s58 will usually overlap temporally.)

At step s60, the processor determines a measure of the liquid level by processing the relative timings of the sensed output signals. This may be carried out in any appropriate manner. Further details of how this is performed in this particular embodiment will now be described with reference to Figure 6.

Figure 6 is a schematic illustration (not to scale) of a timing diagram, with time axis t, representing relative timing information processed by the processor 12 at the above mentioned step s58. A first output pulse 130, which is the output pulse resulting from the coupling of the acoustic energy through the liquid, has a leading edge at a time t₁. A second output pulse 132, which is the output pulse resulting from the remainder of the injected pulse that is not coupled via the liquid and instead travels through the whole length of the rod assembly 2, has a leading edge at a time t₂. The processor 12 determines the time difference Δt between t₁ and t₂. The processor 12 then determines the measure of the liquid level, which is dependent upon the determined Δt value.

Algorithms, settings and the like for the determination, and calibration, of the liquid level value as a function of the determined Δt value are readily implemented by the skilled person for the particular system under consideration, as described earlier above for the first embodiment.

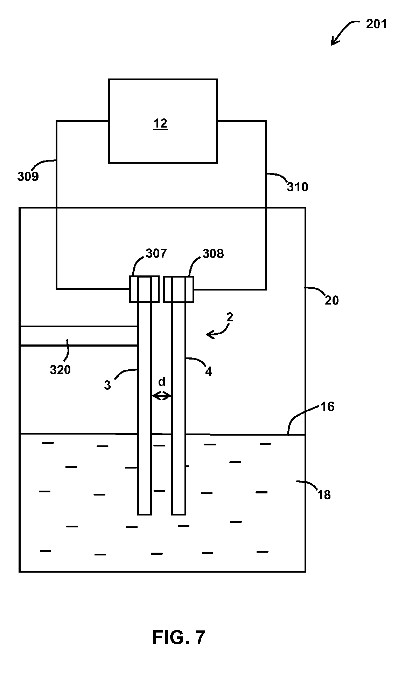

In the above embodiments, the acoustic energy whose liquid level dependent transmission through/between elements of the rod assembly is sensed to provide a measure of liquid level is provided by being specifically generated by an acoustic generator and fed to/injected into the rod assembly. However, in other embodiments, the acoustic energy is not purposively generated, and instead is provided by other means, for example by making use of existing ambient acoustic/vibration energy. One such further embodiment will now be described with reference to Figure 7.

Figure 7 is a schematic illustration (not to scale) of a liquid level sensing system 201 according to one such further embodiment. Details of the elements and operation of the system 201 are the same as those described earlier above for the first embodiment of a liquid level sensor system 1 with reference to Figures 1 to 3, except where described otherwise below.

In this further embodiment, the rod assembly 2 is of the type described for the first embodiment, i.e. comprises two separate rods, namely an input rod 3 and an output rod 4, arranged substantially parallel to each other and with a relatively small separation d therebetween. In this further embodiment, there is no dedicated acoustic generator for providing predetermined input acoustic pulses or other waveforms. Instead, the input rod 3 is arranged to be coupled to/receive ambient acoustic energy. In this embodiment, this is implemented by physically coupling the input rod 3 to the wall of the container 20 by means of a container-input rod coupling fixture, comprising for example metals clamps and bolts. This fixing may replace, or be in addition to, the earlier described means of fixing the input rod 3 in place. The output rod 4 however should remain acoustically isolated from the container 20, e.g. the output rod is still fixed in place in the acoustically isolated manner described earlier for the embodiment of Figure 1.

In this further embodiment, both the input rod 3 and the output rod 4 are provided at their top end with a respective acoustic sensor, which may for convenience be termed the input acoustic sensor 307 (attached to the input rod 3) and the output acoustic sensor 308 (attached to the output rod 308). The input acoustic sensor 307 is optically coupled to the processor 12 via an input link 309, and the output acoustic sensor 308 is optically coupled to the processor 12 via an output link 310 (in other embodiments these links may be electrical).

In operation, some ambient background noise coupled from the container to the input rod 3 by the coupling 320 propagates along the input rod 3 and is coupled by the liquid across to the output rod 4, and then along the output rod 4 to be sensed by the output acoustic sensor 308, as in the embodiments described earlier above. Additionally, some of the ambient background noise coupled from the container to the input rod 3 by the coupling 320 travels along the input rod 3 to be sensed by the input acoustic sensor 307. The corresponding signals output from each sensor 307, 308 are output to the processor 12 via the first link 309 and the second link 310 respectively. The processor 12 then cross-correlates the signals using a time domain signal correlation in corresponding fashion to the time differential processing used in the earlier described first embodiment and shown in Figure 3, but with additional filtering and cross-correlation to isolate and compare specific acoustic components, to determine a measure of the liquid level. For example, correlation of signals may be performed using time/frequency analysis of signals followed by comparison of features in the time/frequency space. Features may be isolated and noise reduced by using, for example, wavelet analysis methods.

Apparatus, including the processor 12 and the acoustic generator 6, for implementing aspects of the above arrangements, and performing various method steps as described, may be provided by configuring or adapting any suitable apparatus, for example one or more computers or other processing apparatus or processors. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

It should be noted that although in Figures 2 and 5 all the process steps have, for convenience and ease of understanding, been depicted as discrete temporally-sequential steps, nevertheless some of the process steps may in fact be performed simultaneously or at least overlapping to some extent temporally.

In the above embodiments the liquid whose level is sensed is fuel. However, this need not be the case, and in other embodiments other liquids may be sensed.

In the above embodiments, a rod assembly, comprising a pair of solid metal rods (or a solid metal rod comprising two portions) of substantially equal dimensions and same material, arranged parallel to each other, is used as an acoustic waveguide/acoustic guiding structure whose depth within the liquid leads to sensing of the liquid level. Although use of common materials and/or dimensions is preferred as this reduces measurement variables, nevertheless these aspects are not essential, and in other embodiments the rods/portions may be of different material and/or dimension etc. to each other, and/or not necessarily arranged parallel to each other, and so on. Also, the material need not be metal, and the rods need not be solid (e.g. they may instead be hollow and contain a liquid that is a good conductor of sound waves). Any form of structure that provides suitable acoustic waveguiding functionality may be employed.

In further embodiments, plural output rods/output rod portions, with respective acoustic sensors, may be provided in combination with an input rod/rod portion. This would allow redundancy and/or averaging of results and/or elimination of random/noise signals, and so on.

In the embodiment described with reference to Figure 4 the second link, i.e. the link between the acoustic generator and the processor, is omitted, and the timing information sent from the acoustic generator to the processor 12 in the embodiment shown in Figure 1 is not provided to the processor in the embodiment shown in Figure 4. This is because in the embodiment shown in Figure 4, the acoustic pulse that travels directly through the whole of the single-piece rod assembly 2 is able to provide a form of reference timing for the processor to ultimately make use of when determining the liquid level. However, in other embodiments using the single piece rod assembly of Figure 4, the second link, i.e. the link between the acoustic generator and the processor, is provided, and timing information is sent from the acoustic generator to the processor 12. This timing information is then made use of by the processor as part of the process of determining the liquid level. This may be instead of or in addition to making use of the timing information of the acoustic pulse that travels directly through the whole of the single-piece rod assembly 2.

In the above embodiments where an acoustic generator provides acoustic pulses (or other acoustic waves), these are fed to the input rod/rod portion via an acoustic waveguide that is in the form of a flexible fibre of the same construction as an optical fibre. In other embodiments, electrical cabling comprising stranded or single metal wire cores may be used. However, these examples are not the only possibilities, and in other embodiments any other suitable type of acoustic waveguiding structure may be employed, e.g. in environments where the liquids being sensed do not provide explosive or combustion hazards.

In the above embodiments the acoustic sensor(s) is/are is a fibre-optic acoustic wave sensor, which is an example of a non-electrical transducer and the link from the acoustic sensor to the processor is fibre-optic, i.e. non-electrical. However, this need not be the case, and in other embodiments, other types of non-electrical transducers may be employed as the acoustic sensor. In yet further embodiments, electrical transducers and/or electrical links may be employed, e.g. in environments where the liquids being sensed do not provide explosive or combustion hazards.

In the above embodiments individual acoustic pulses are generated and sent through the liquid level sensing system, and processed accordingly. However, this need not be the case, and in other embodiments series of pulses may be processed in overlapping or other well known signal envelope fashion i.e. more generally any suitable acoustic wave form may be used, with the signal and/or timing processing thereof adapted accordingly. For example, the acoustic generator may produce bursts of single frequency acoustic waves allowing the sensor to operate in a phase locked loop mode or narrow bandpass filtered to improve accuracy and signal to noise ratio. Alternatively, chirped or swept frequency sound may be produced from the generator hence providing an extra parameter for signal processing purposes that links frequency to acoustic signal transit time.

It is to be noted that the term "acoustic" as used herein refers to mechanical waves/vibrations and includes sound, ultrasound and infrasound, Any frequency or frequencies within these ranges may be employed, according to the requirements of a particular situation under consideration, in the above embodiments.

One or more of the following advantages tend to be provided by the various embodiments described above.

In certain embodiments the liquid level sensing system functions without the use of electrical devices or links at the measurement point. Acoustic pulses can be delivered using suitable acoustic waveguides (e.g. flexible fibres) and detected using non-electrical transducers such as fibre-optic sensors and links. This provides a system suitable for use in explosive or highly combustible environments such as fuel tanks.

Compared to conventional pulse echo systems, the above described embodiments avoid issues arising from spurious reflections and tend to alleviate or avoid any issues arising from tilted liquid surfaces. Also, because the input acoustic energy is only input into the rod assembly (rather than being broadcast into the whole container space), significantly lower power will tend to be required.

## Claims

1. A liquid level sensing system, comprising:
a first substantially elongate acoustic waveguide, hereinafter referred to as the input waveguide (3; 103);
a second substantially elongate acoustic waveguide, hereinafter referred to as the output waveguide (4; 104);
the input waveguide (3; 103) and the output waveguide (4; 104) both being positioned extending into liquid (18) to be sensed and positioned relatively closely to each other compared to the lengths of the waveguides;
the input waveguide (3; 103) being arranged to receive acoustic energy;
the system further comprising:
an acoustic sensor (8) attached to the output waveguide (4; 104) for sensing acoustic energy at the output waveguide (4; 104) that has been transferred from the input waveguide (3; 103) to the output waveguide (4; 104) by the input waveguide (3; 103) and the output waveguide (4; 104) being acoustically coupled by the liquid (18); and
a processor (12) arranged to process timing characteristics of the sensed acoustic energy to determine a measure of the liquid level.

2. A system according to claim 1, wherein the input waveguide (3; 103) being arranged to receive acoustic energy comprises the input waveguide (3; 103) being acoustically coupled to an acoustic generator (6) arranged to provide input acoustic energy to the input waveguide (3; 103).

3. A system according to claim 2, wherein the acoustic generator (6) is further arranged to provide, to the processor (12), timing information related to the input acoustic energy.

4. A system according to claim 4, wherein the processor (12) is further arranged to process the timing information related to the input acoustic energy as provided by the acoustic generator (6), as part of determining the measurement of the liquid level.

5. A system according to any of claims 2 to 4, wherein the acoustic generator (6) is acoustically coupled to the input waveguide (3; 103) by a further acoustic waveguide (5), the further acoustic waveguide (5) comprising non-electrical fibres.

6. A system according to any of claims 1 to 5, wherein the input waveguide (3) and the output waveguide (4) are separate discrete objects.

7. A system according to any of claims 1 to 5, wherein the input waveguide (103) and the output waveguide (104) are different portions of a single object (2), a return shape being provided between the two portions (103, 104) such that the input waveguide (103) and the output waveguide (104) extend with the relatively closely spaced apart positioning.

8. A system according to claim 7, wherein the processor (12) is further arranged to process timing information of sensed acoustic energy that has travelled along the input waveguide (103) and then via the return shape into the output waveguide (104) and then along the output waveguide (104) before being sensed by the acoustic sensor (8), as part of determining the measurement of the liquid level.

9. A system according to claim 1, wherein the input waveguide (3) and the output waveguide (4) are separate discrete objects, and wherein being arranged to receive acoustic energy comprises the input waveguide (3) being acoustically coupled to an ambient acoustic energy source, and wherein the system further comprises a further acoustic sensor (307), the further acoustic sensor (307) being attached to the input waveguide (3).

10. A system according to claim 9, wherein the processor (12) is further arranged to process timing information of sensed acoustic energy sensed by the further acoustic sensor (307), as part of determining the measurement of the liquid level.

11. A system according to any of claims 1 to 10, wherein the acoustic sensor/sensors is/are a fibre-optic based acoustic sensor.

12. A liquid level sensing method, the method comprising:
providing an input acoustic waveguide (3; 103) and an output acoustic waveguide (4; 104) in a liquid container (20);
injecting acoustic energy into the input acoustic waveguide (3; 103);
sensing timing information of acoustic energy that has been coupled into the output acoustic waveguide (4; 104) from the input acoustic waveguide (3; 103); and
determining a measure of the liquid level from the timing information.

13. A method according to claim 12, wherein the injected acoustic energy is provided in the form of one or more acoustic pulses.

14. A computer program or plurality of computer programs arranged such that when executed by a computer system it/they cause the computer system to operate in accordance with the method of claim 12 or claim 13.

15. A machine readable storage medium storing a computer program or at least one of the plurality of computer programs according to claim 14.
